# EUROPEAN PATENT SPECIFICATION

(11) **EP 2 742 722 B1**
(45) Date of publication and mention of the grant of the patent: **12.07.2017**
(21) Application number: 11743825.9
(22) Date of filing: 11.08.2011
(51) Int. Cl.: H04W 28/08, H04L 12/70

(54) **TRAFFIC-LOAD BASED FLOW ADMISSION CONTROL**
AUF VERKEHRSLAST BASIERENDE FLUSSZULASSUNGSREGELUNG
CONTRÔLE D'ADMINISTRATION DE FLUX BASÉ SUR UNE CHARGE DE TRAFIC

(43) Date of publication of application: 18.06.2014
(73) Proprietor: Telefonaktiebolaget LM Ericsson (publ), 164 83 Stockholm (SE)
(72) Inventor: BASILIER, Henrik, S-18734 Täby (SE); LUDWIG, Reiner, 52393 Hürtgenwald (DE)
(74) Representative: Ericsson
(86) International application number: PCT/EP2011/063860
(87) International publication number: WO 2013/020602

(56) References cited:
- EP-A1- 1 515 487
- US-A1- 2005 007 954
- US-A1- 2007 053 294
- US-B1- 7 215 637

## Description

### Technical Field

The present invention relates to methods of controlling data traffic and to a corresponding device.

### Background

In communication networks, differentiated handling of network traffic may be used to meet requirements with respect to Quality of Service (QoS) depending on the type of network traffic. For this purpose, a forwarding treatment of data packets, i.e., the way of forwarding data packets by a node, may be adjusted so as to obtain a desired QoS level or prioritize certain types of traffic over others.

For example, in mobile networks network traffic related to a specific service may be directed to a bearer offering a certain QoS level. In this respect, a bearer is considered to be an information transmission context or path of defined characteristics, e.g. capacity, delay, priority, and/or bit error rate. It is possible to establish a number of bearers between a gateway of a mobile communication network and a user equipment (UE), e.g., a mobile phone or other type of mobile terminal. A bearer may carry downlink (DL) data traffic in a direction from the network to the user equipment, and may carry data traffic in an uplink (UL) direction from the user equipment to the network. In the gateway and in the UE the data traffic, which includes a plurality of IP data packets (IP: "Internet Protocol", which may be the IP Version 4, also referred to as IPv4, or the IP Version 6, also referred to as IPv6) can be filtered, e.g., using IP 5-tuple packet filters, thereby directing the IP data packets to a desired bearer.

In this context, US 7215637 B1 discloses methods and devices for processing packets. Therein, the processing device may include an input interface for receiving data units containing header information of respective packets, a first module configurable to perform packet filtering based on the received data units, a second module configurable to perform traffic analysis based on the received data units, a third module configurable to perform load balancing based on the received data units and a fourth module configurable to perform route lookups based on the received data units. US 2007/053294 A1 discloses packet handling wherein a packet marked with a congestion indicator may be received, and upon receipt of the Cl, a load-balancing operation may be performed among a plurality of physical links upstream from a point of congestion to alleviate the congestion. In a similar way, US 2005/007954 A1 discloses a method of load balancing for packet data flows in a packet data. According to the method, a packet data flow is received and it is verified whether the packet data flow belongs to one of the existing packet data delivery categories. The method also includes assigning a first delivery path indicator for the packet data delivery category, retrieving load conditions prevailing in the network, and checking whether one of the existing packet data delivery categories conforms to prescribed resource policy rules for one of the existing packet data delivery category. When the step of checking generates a negative result, the method involves the step of assigning an alternative delivery path indicator for the packet data delivery category. Further, EP 1515487 A1 discloses a load balancing method for a wireless local area network which has a plurality of access points. A load balancing decision is made according to traffic conditions and bandwidth availability of each traffic priority class based on a corresponding class of service. The load balancing decision also takes into consideration of VLANs per VLAN tag basis. Each of the VLANs is defined with the corresponding traffic priority class.

However, there may be limitations for the bandwidth and/or volume of traffic that can be given a preferential treatment, e.g., using dedicated bearers. For example, the prioritization of traffic may excessively use available network resources, which may result in degradation of overall network performance. In some cases, non-prioritized traffic may be affected in an undesirable manner by a lack of available network resources. In some cases even prioritized traffic could be affected. For this reason, the operator of a mobile network may set a limit on the total bandwidth and/or the total volume which can be used by dedicated bearers over some time period.

Accordingly, there is a need for techniques which allow for an efficient usage of network resources when performing differentiated handling of data traffic.

### Summary

According to an embodiment of the invention, a method of controlling data traffic in a mobile, as defined in claim 1, is provided. According to a further embodiment of the invention, a device for controlling data traffic in a mobile network, as defined in claim 11, is provided. According to further embodiments, other methods or devices, may be provided.

### Brief Description of the Drawings

Fig. 1 schematically illustrates a communication system in which concepts according to embodiments of the invention may be implemented.
Fig. 2 schematically illustrates an implementation of concepts according to an embodiment of the invention in the communication system of Fig. 1.
Fig. 3 schematically illustrates an example of controlling data traffic using concepts according to an embodiment of the invention.
Fig. 4 shows a communication network environment in which concepts according to an embodiment of the invention are applied in a content booster architecture.
Fig. 5 schematically illustrates a network node according to an embodiment of the invention.
Fig. 6 shows a flowchart for illustrating a method according to an embodiment of the invention.

### Detailed Description of Embodiments

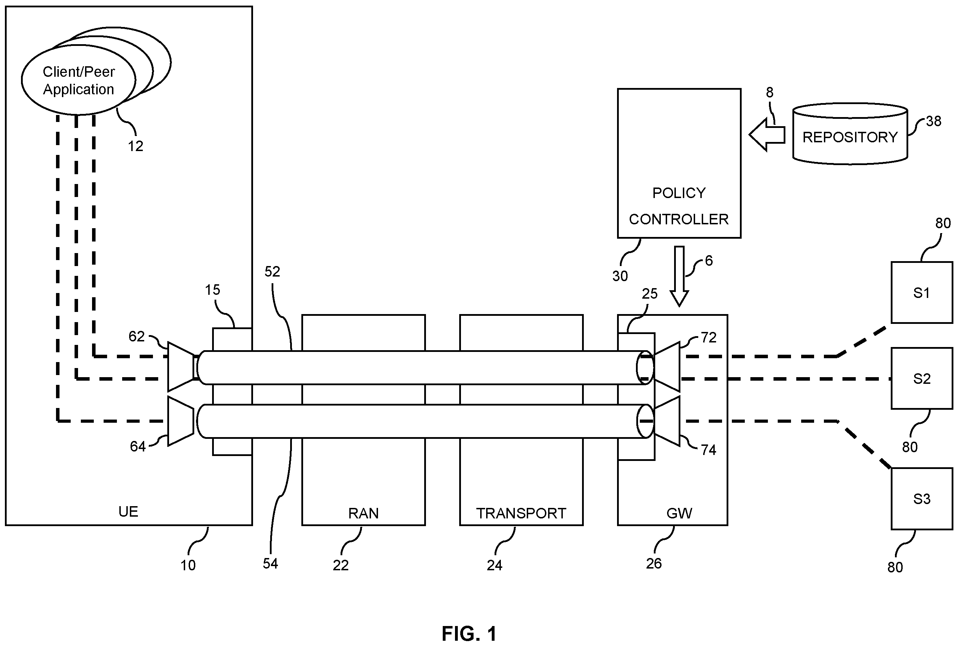

In the following, the invention will be explained in more detail by referring to exemplary embodiments and to the accompanying drawings. The illustrated embodiments relate to concepts of controlling data traffic. As illustrated in Fig. 1, the concepts are applied in a mobile communication network according to the 3GPP (Third Generation Partnership Project) Technical Specifications (TSs). However, it is to be understood that the illustrated concepts may be applied in other types of communication network as well, e.g., using other types of radio access technology.

Fig. 1 schematically illustrates a mobile network environment in which concepts according to embodiments of the invention can be applied.

The communication network environment includes a UE 10, which may also be referred to as a terminal, and a number of network components 22, 24, 26, 30. Among these network components there is a Radio Access Network (RAN) 22. The RAN is based on a certain type or certain types of radio access technology, e.g., GSM (Global System for Mobile Communications), EDGE (Enhanced Data Rate for GSM Evolution), UMTS (Universal Mobile Telecommunications System), HSPA (High Speed Packet Access), or LTE (Long Term Evolution). Although the RAN 22 is illustrated as a single node, it is to be understood that the RAN 22 may actually be formed of a number of components, which are not further explained herein. The RAN 22 is coupled to a transport node 24, which in turn is coupled to a gateway (GW) 26. Here, it is to be understood that alternatively more than one transport node 24 may be coupled between the RAN 22 and the gateway 26 or that the RAN 22 may be directly coupled to the gateway 26. The gateway 26 may be a Gateway GPRS Support Node (GGSN) providing a connection of GPRS-based services to one or more external packet data networks. The gateway 26 may also be a Packet Data Network Gateway (PDN GW).

In addition, the mobile communication network includes a policy controller 30, which is implemented as a Policy and Charging Rules Function (PCRF) according to the 3GPP TSs. The policy controller 30 may be implemented by dedicated hardware and/or comprise software functions executed by a processor. The gateway 26 and the policy controller 30 are typically regarded as components of a core network. The policy controller 30 communicates with the gateway 26 via a signaling path 6, which may be implemented using the Gx interface according to the 3GPP TSs. The policy controller 30 may be further coupled to a repository 38 via a signaling path 8, e.g., implemented using the Sp interface according to the 3GPP TSs. The policy controller 30 may thus receive policy data relating to a specific user and/or relating to a specific service available in the mobile communication network, e.g., mobile TV or delivery of content.

As further illustrated, data traffic between the network and the user equipment 10 can be carried by a number of bearers 52, 54. The data traffic may pertain to one or more client/peer applications 12 running on the UE 10, e.g., may relate to certain services. The data traffic may also include content to be delivered to the UE, e.g., multimedia content or software. As illustrated, the data traffic may be communicated between the UE 10 and various network elements 80, in the illustrated example a first server (S1), a second server (S2), and a third server (S3). In the illustrated example, data traffic communicated between the UE 10 and the first server S1 and data traffic communicated between the UE 10 and the second server S2 is carried by the bearer 52. Data traffic communicated between the UE 10 and the third server S3 is carried by the bearer 54. Accordingly, selected data traffic is directed to one of the bearers 52, 54.

The bearers 52, 54 are established between the user equipment 10 and the gateway 26. The bearers 52, 54 carry data traffic in both the DL and the UL direction, i.e., may also be regarded as being formed of a DL bearer and a UL bearer. For supporting bidirectional communication on the bearers 52, 54, the UE 10 is provided with a corresponding interface 15 which allows for receiving incoming data packets from the bearers 52, 54 and sending outgoing data packets on the bearers 52, 54. Similarly, the gateway 26 is provided with a corresponding interface 25 which allows for receiving incoming data packets from the bearers 52, 54 and sending outgoing data packets on the bearers 52, 54.

The bearers 52, 54 may include a default bearer 52 generally established for offering packet-based services to the user equipment 10 and a dedicated bearer 54. The dedicated bearer 54 may be used for prioritizing data traffic. For this purpose, the dedicated bearer may have a higher QoS level than the default bearer. The default bearer 52 is typically established when the UE 10 attaches to the gateway 26. One or more dedicated bearers 54 may be established on demand, e.g., when data packets of selected data traffic requiring a certain QoS level need to be transmitted.

Each bearer 52, 54 may be associated with a corresponding QoS profile. The QoS profile may be defined through QoS parameters such as a QoS Class Identifier (QCI), an Allocation/Retention Priority (ARP), a Traffic Handling Priority (THP), a Maximum Bit Rate (MBR), an Aggregate Maximum Bit Rate (AMBR), and/or a Guaranteed Bit Rate (GBR). Accordingly, a certain QoS level may be provided for communicating data packets between the UE 10 and the gateway 26 by directing the data packets to a corresponding bearer. Typically, a dedicated bearer will differ from the default bearer 52 in at least one of the QoS parameters. For example, the dedicated bearer 54 may have a higher MBR and/or AMBR than the default bearer 52. Further, the dedicated bearer 54 may be a GBR bearer while the default bearer 52 is a non-GBR bearer.

In the UE 10, the data packets are directed to a desired bearer 52, 54 using correspondingly configured UL packet filters 62, 64. In the gateway 26, the data packets are directed to the desired bearers 52, 54 using correspondingly configured DL packet filters 72, 74. Parameters of the QoS profile may be signaled from the policy controller 30 to the gateway 26 using the signaling path 6. Similarly, the DL packet filters 72, 74 to be used in the gateway 26 may be signaled from the policy controller 30 to the gateway 26 using the signaling path 6. As regards the UL packet filters 62, 64 used in the UE 10, these may be signaled from the policy controller 30 via the gateway 26 to the UE 10. The packet filters 62, 64, 72, 74 may be configured to operate on the basis of an IP 5-tuple of the data packets, e.g., on the basis of a destination IP address, a source IP address, a destination port, a source port, and/or an IP protocol type of the data packets.

In the following, concepts according to embodiments of the invention will be explained, which allow for an efficient use of network resources by avoiding excessive traffic on a dedicated bearer. These concepts are based on performing an admission control on a flow level. The following explanations refer to the default bearer 52 and to the dedicated bearer 54 as illustrated in Fig. 1. However, it should be kept in mind that there may actually be a plurality of bearers, default and/or dedicated, in the mobile network and that these bearers may share network resources, e.g., use the same radio resources (such as carrier frequencies) and/or transport network resources (such as the node 24 of Fig. 1). Accordingly, increased traffic on the bearer 54 may affect the default bearer 52, but also other bearers sharing network resources with the dedicated bearer 54. In the embodiments as described herein, two stages of controlling the mapping of data traffic to a dedicated bearer are provided for: a first stage which determines an association of a certain type of data traffic with a dedicated bearer, and a second stage which decides, depending on traffic load information, whether a packet flow of this data traffic can be admitted to the dedicated bearer. In this way, it can be ensured that a new packet flow is admitted to the dedicated bearer when sufficient network resources to be used by the dedicated bearer are available. Otherwise, the new packet flow can be directed to another bearer, e.g., to a default bearer such as the bearer 52. As used herein, a packet flow is a sequence of data packets transmitted between a certain source and a certain destination. In the case of IP data packets, the destination can be identified on the basis of a destination IP address and a destination port in the data packets, and the source can be identified by a source IP address and a source port in the data packets. Further, a packet flow can be identified on the basis of a protocol type indicated in the data packets. Accordingly, in some embodiments data packets may be considered to belong to a certain packet flow if the carry the same IP 5-tuple.

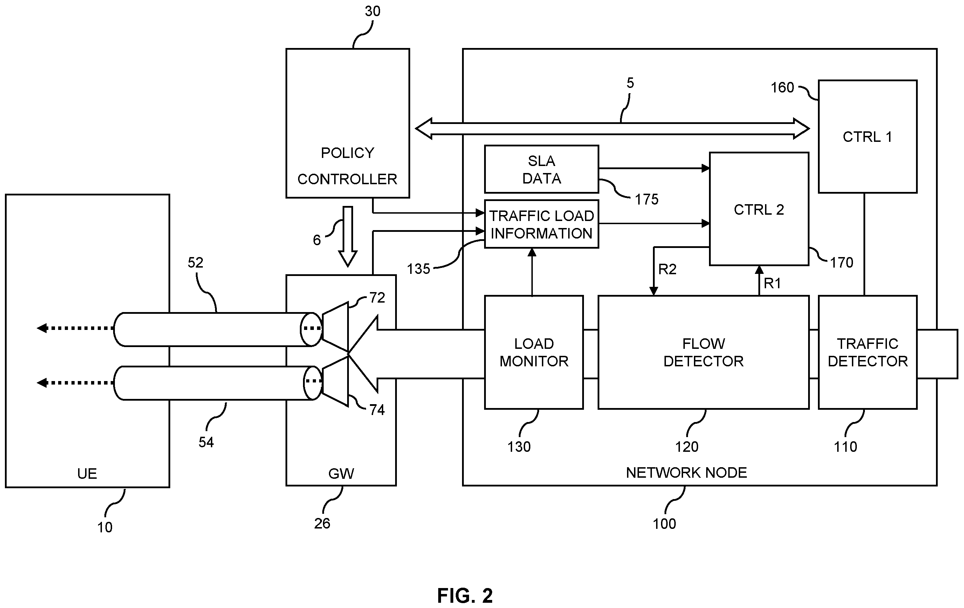

An implementation of the above concepts in a network node 100 is schematically illustrated in Fig. 2. In Fig. 2, components corresponding to those of Fig. 1 are denoted by the same reference signs, and details concerning these components can be taken from the corresponding explanations in connection with Fig. 1. As explained above, the dedicated bearer 54 may be established for carrying prioritized data traffic to or from the UE 10. The prioritized data traffic may for example include content from a content provider (CP) or content data network (CDN), e.g., hosting the server S3 of Fig. 1.

As illustrated in Fig. 2, the network node 100 is provided with a traffic detector 110, a flow detector 120, a load monitor 130, a first controller (CTRL1) 160, and a second controller (CTRL2) 170. As further illustrated, traffic load information 135 as obtained by the traffic load monitor 130 and Service Level Agreement (SLA) data 175 may be maintained in the network node 100, e.g., in a memory.

The first controller 160 implements the first stage of control. For this purpose, the first controller 160 is coupled to the traffic detector 110. In the first stage of control, when the traffic detector 110 detects a certain type of data traffic, e.g., data traffic from a selected source such as from one of the servers 80 in Fig. 1, a dedicated bearer for transmission of this data traffic is determined, in the illustrated example the dedicated bearer 54. This may be accomplished on a user level, i.e., by distinguishing between different users sending or receiving the data traffic. For example, such users could be different CPs or CDNs acting as source of the data traffic. Such users could also be different subscribers using the UE 10 for receiving the data traffic. The traffic detector 110 may detect the data traffic by inspecting a payload section in data packets of the data traffic, e.g., using deep packet inspection (DPI). The traffic detector 110 could also detect the data traffic on the basis of a source address of data packets of the data traffic or on the basis of an identifier of the selected source in a network name resolution message preceding the data traffic, e.g., in a Domain Name System (DNS) query or in a DNS response.

The determination of the dedicated bearer 54 may involve initiating establishment of the dedicated bearer 54 and configuring a packet filter, in the illustrated example the packet filter 74, for directing the data traffic to the dedicated bearer 54. This may be accomplished by sending control signaling to a mobile network node, in the illustrated example to the policy controller 30. In Fig. 2, such control signaling is illustrated as being transmitted on a signaling path 5, which may be an application layer signaling path such as implemented by the Rx interface according to the 3GPP TSs. It is to be understood that other types of control signaling could be used as well, e.g., direct control signaling to the gateway 26 using the signaling path 6.

In some cases, the dedicated bearer 54 may already exist when the data traffic is detected. In such cases, the dedicated bearer 54 can be selected and does not need to be established, and the determination of the dedicated bearer may involve configuring a packet filter, e.g., the packet filter 74, for directing the data traffic to the dedicated bearer, without first initiating establishment of the dedicated bearer. In some cases, it may also be determined that an existing packet filter is suitable to direct the data traffic to an existing dedicated bearer, and also configuration of the packet filter could be omitted. The first controller 160 may use the signaling path 5 to receive information concerning existing bearers, from which the first controller may conclude that the dedicated bearer 54 is already established and/or that configuration of a packet filter is not needed. Again it is to be understood that also other types of control signaling could be used to receive the information concerning existing bearers, e.g., direct control signaling from the gateway 26 using the signaling path 6.

The second controller 170 implements the second stage of control. For this purpose, the second controller 170 is coupled to the flow detector 120. In the second stage of control, a new packet flow in the data traffic is detected by the flow detector 120. This packet flow would normally be directed to the dedicated bearer 54 as determined in the first stage of control. On the basis of the traffic load information 135, the second controller 170 takes a decision whether the detected packet flow can be admitted to the dedicated bearer 54. For example, the decision may take into account whether adding the detected packet flow to the dedicated bearer 54 excessively affects data transmissions on other bearers sharing network resources with the dedicated bearer 54, e.g., on the default bearer 52 or on other dedicated bearers established with respect to the UE 10 or with respect to one or more other UEs. For this purpose, the traffic load information 135 may include a traffic load on the dedicated bearer 54 and/or on such other bearers, e.g., in the form of a used bandwidth and/or on an accumulated traffic volume on the bearers. Also a total number of the bearers sharing network resources may be taken into account. For example, if the traffic load on the bearers is below a threshold, the second controller 170 may decide to admit the detected packet flow to the dedicated bearer 54, and if the traffic load is above a threshold, the second controller may decide not to admit the detected packet flow to the dedicated bearer 54.

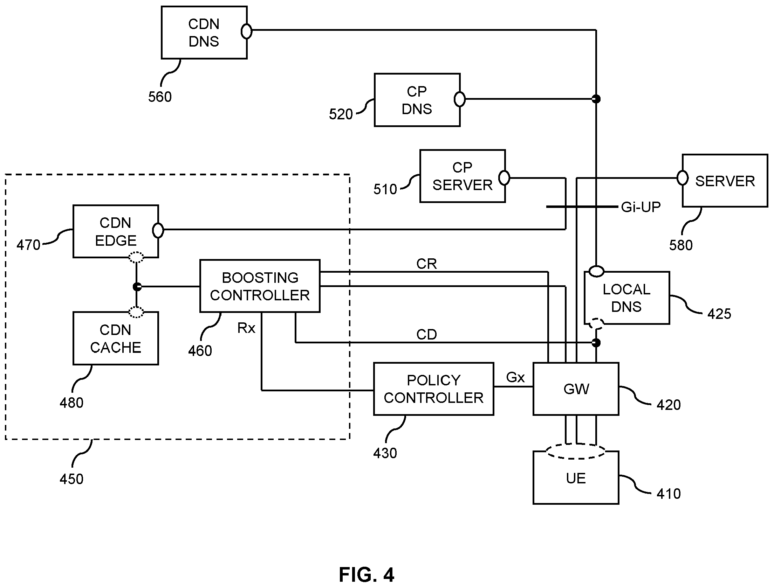

As illustrated, the decision by the second controller 170 may also take into account the SLA data 175. This may for example be useful if the network node 100 is not part of the mobile network used to establish the dedicated bearer 54, but rather operated by a further party having a SLA with the operator of the mobile network concerning the use and control of prioritized resources. The SLA data could also reflect a SLA of the operator of the mobile network or of a further party with a CP or operator of a CDN. An example of such a scenario will be further explained in connection with Fig. 4. The SLA data 175 may for example define a limit for the used bandwidth and/or accumulated traffic volume in a certain time period on dedicated bearers as controlled by the network node 100. The decision by the second controller 170 may then be used to ensure that the SLA with the operator of the mobile network and/or the SLA with the CP or operator of the CDN is not violated.

The flow detector 120 may detect the packet flow by inspecting a packet header of the data packets, i.e., by using shallow packet inspection. For example, the packet flow could be detected by inspecting an IP 5-tuple of the data packets. Upon detecting a new packet flow, the flow detector 120 may submit a request R1 to the second controller 170, and the second controller 170 may return a response R2 with the decision whether the detected packet flow can be admitted or not. In some embodiments, the flow detector 120 could also be configured to detect ending of a certain packet flow. Information that a packet flow ends could for example be used as supplemental information to the traffic load information 135. Further, ending of a packet flow could also be used to trigger obtaining updated traffic load information. For example, when a certain packet flow ends, another packet flow which was assigned to the dedicated bearer 54 but remapped to the default bearer 52, could be returned to the dedicated bearer 54.

Having obtained the decision from the second controller 170, the flow detector 120 marks the data packets of the detected packet flow according to the decision. This may be accomplished by including an indicator into the data packets, e.g., by setting a Differentiated Services Code Point (DSCP) field in an IP protocol header of the data packets to a certain value.

The packet filter(s) used for directing the data packets to the dedicated bearer 54 are configured to operate also on the basis of the marking of the data packets, such that the data packets marked to indicate that their packet flow can be admitted to the dedicated bearer are directed to the dedicated bearer 54 whereas data packets marked to indicate that their packet flow cannot be admitted to the dedicated bearer are directed to another bearer, e.g., to the default bearer 52. In the illustrated example the packet filter 74 would normally direct the data packets of the detected packet flow to the dedicated bearer 54 due to matching IP 5-tuple characteristics. However, if the data packets are marked to indicate that the packet flow cannot be admitted to the dedicated bearer 54, the packet filter 74 would block the data packets from being directed to the dedicated bearer 54. The packet filter 72 associated with the default bearer 52 may in turn have a match-all characteristic and therefore direct the data packets of the detected packet flow to the default bearer 52.

The load monitor 130 is configured to monitor the data traffic and determine the traffic load information 135 to be used by the second controller 170 when taking the decision. For example, the load monitor may monitor all data traffic finally mapped to a dedicated bearer by the first and second controllers 160, 170, i.e., all data traffic that has passed the two stages of control. In the illustrated example, it has to be understood that this may not only include the data traffic mapped to the dedicated bearer 54, but also data traffic mapped to other dedicated bearers which are not illustrated in Fig. 2. For example, such dedicated bearers could be established with respect to other UEs. In some cases, also data traffic which is mapped to a default bearer by the two stages of control, e.g., to the default bearer 52 or to another default bearer, may be monitored. This monitoring is used to obtain the traffic load information 135. The traffic load information 135 may for example be determined in terms of used bandwidth and/or accumulated volume as measured over some predefined time period. The traffic load information may also indicate a number of dedicated bearers presently established under control of the network node 100.

In some embodiments, the traffic load information may in addition or as an alternative be obtained from external sources, e.g., from one or more nodes of the mobile network. In other words, functionalities of the load monitor 130 could be distributed. By way of example, Fig. 2 illustrates such external traffic load information being provided from the gateway 26 and/or the policy controller 30. However, it could be obtained in a similar manner from other nodes of the mobile network, such as from the RAN 22 or the transport network node 24 of Fig. 1. In this way, the capabilities of the mobile network or of individual nodes of the mobile network may be taken into account by the second controller 170. Accordingly, in some implementations, the traffic load information 135 may represent individual loads of various network elements. The second controller could then consecutively check each of the loads before deciding to admit the detected packet flow.

In some embodiments, the second controller 170 may take the decision to control a rate at which packet flows are admitted to the dedicated bearer 54 and to other dedicated bearers controlled by the network node 100, e.g., as defined in terms of a number of admitted flows per time unit. For example, a threshold for the rate could be set. This threshold could be defined statically, e.g., by the SLA data 175. This threshold could also be determined dynamically depending on the traffic load information, e.g., on the basis of traffic load information obtained from the mobile network, e.g., as mentioned above. The latter scenario may be useful if the network node is not part of the mobile network and prioritization of data traffic using dedicated bearers is also controlled locally within the mobile network, e.g., by the policy controller 30. For example, the second controller 170 may define, depending on the traffic load information, a number of packet flows that can be admitted to the dedicated bearers in a certain time interval. If the traffic load information indicates that the traffic load approaches a limit, the second controller 170 may reduce this number of packet flows that can be admitted to the dedicated bearers in a certain time interval. The decision could then be taken depending on whether this number of packet flows that can be admitted is reached. If in a certain time interval the number is reached, the decision would be that the detected new flow cannot be admitted to the dedicated bearer 54. Controlling the rate at which packet flows are admitted is may be desirable because the bandwidth or traffic volume to be used by a newly detected packet flow are typically not known in advance. However, other control algorithms could be used as well.

In some embodiments, also the first controller 160 make take into account the traffic load information 135 and/or the SLA data 175 when determining the dedicated bearer for transmission of the data traffic as detected by the traffic detector 110. In such embodiments, the first stage of control could be used to provide a coarse grained control and the second stage of control could be used to provide a fine grained control substantially on the basis of the same input data. For example, the first controller 160 and the second controller 170 may base their control actions on a pool of available resources, e.g., as defined for an area served by the gateway 26 or a subunit of the gateway 26, e.g., a processing blade. If the user level control of the first stage distinguishes between different CPs or CDNs, the resource pool could also be defined for a certain user or subdivided between different users, e.g., to take into account that different handling of data traffic for different CPs or CDNs is desirable.

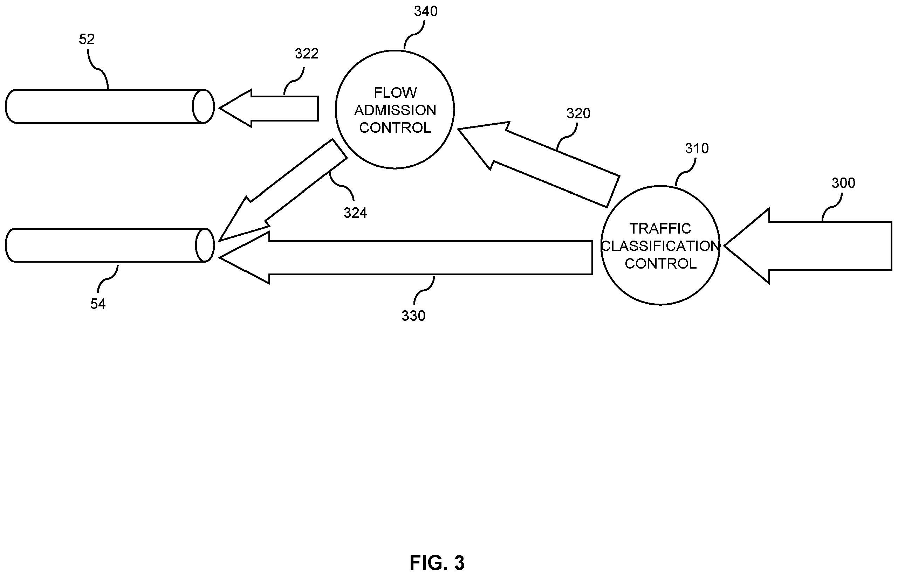

Fig. 3 shows an example for illustrating the effects of the two stages of control on DL data traffic 300.

As illustrated, the DL data traffic 300 is first subjected to a traffic classification control process 310 as accomplished by the traffic detector 110 and the first controller 160 of Fig. 2. The traffic classification control process 310 distinguishes between different types of data traffic, e.g., data traffic coming from different sources such as different CPs or CDNs. The result of the traffic classification control process 310 is a first type of data traffic 320 and a second type of data traffic 330. The bearer determination of the traffic classification control process 310 designates the first type of data traffic 320 for transmission on the dedicated bearer 54, and designates the second type of data traffic for transmission on the default bearer 52.

The first type of data traffic 320 is then subjected to a flow admission control process 330 as accomplished by the flow detector 120 and the second controller 170 of Fig. 2. The flow admission control process 330 may remap a packet flow in the first type of data traffic 320, designated by the traffic classification control process 310 for transmission on the dedicated bearer 54, to the default bearer 52. This is accomplished on the basis of the traffic load information. The result of the flow admission control process 330 is a first packet flow 322 and a second packet flow 324. The flow admission control process 330 remaps the second packet flow 324 to the default bearer 52, and leaves the first packet flow 322 on the dedicated bearer 54.

Fig. 4 shows a communication network environment with a content booster architecture, in which the above concepts of flow admission control on the basis of traffic load information may be applied. The purpose of the content booster architecture is to offer an improved Quality of Experience (QoE) in content delivery from one or more CPs or CDNs, which may correspond to the servers 80 as illustrated in Fig. 1. As illustrated, the content booster architecture includes infrastructure of a mobile broadband (MBB) operator, i.e., a GW 420 to which a UE 410 may attach, a policy controller 430, a local Domain Name System (DNS) 425, and an Internet Peering Point Gi-UP. Co-located with this infrastructure is a content booster infrastructure 450, which includes a boosting controller 460. Further, the content booster infrastructure 450 includes an edge server 470 of a CDN and/or a cache server 480 of a CDN. The purpose of the edge server 470 and the cache server 480 is to accelerate delivery of content from a content provider CP server 510 to the GW 420 by acting as a local proxy and a local cache, respectively. Further, the co-location with the infrastructure of the MBB operator also allows for accelerating content delivery from the GW 420 to the UE 10.

In addition, Fig. 4 also illustrates a CP DNS 520, an external CDN DNS 560, and an external server 580, e.g., any type of Internet server. It is to be understood that the content booster infrastructure 450 may actually have interfaces towards a plurality of MBB networks, CPs, and CONs.

In general terms, the idea of the content booster architecture is to perform differentiated handling of data traffic on a communication path using the content booster infrastructure acting as a broker. The broker may have SLAs on the one hand with one or more CPs, e.g., with an Internet auction provider, and on the other hand with one or more MBB operators who in turn have associated subscribers with respective UEs. The CPs may also have SLAs with CDN operators to host content so that it can transmitted in a differentiated way, e.g., with higher quality of service, to users. The broker may control upgrades or downgrades for priority of traffic between the GW 420 and the UE 410. For this purpose, the boosting controller 460 can inspect end user content request messages, inspect end user DNS replies, keep track of charging and SLA fulfillment, trigger a priority upgrade request, or trigger a priority downgrade request. For these purposes, the boosting controller 460 and in general the content booster architecture 450 may comprise interfaces as depicted in Fig. 4. More specifically, the boosting controller 460 may have an interface with respect to the policy controller 430 in order to downgrade or upgrade priority of traffic, e.g., by initiating bearer control procedures. As illustrated, this interface may be implemented as the Rx interface according to the 3GPP TSs. In some implementations, the boosting controller 460 may have an interface for receiving copied DNS traffic CD between the GW 420 and the local DNS 425. This allows the boosting controller 460 to identify whether a DNS query or a DNS response relates to content from a peered CP or CDN requiring prioritized delivery of content by the content boosting infrastructure 450. However, other mechanisms of detecting data traffic to be prioritized may be used as well, e.g., operating on the basis of a source address of data packets. In the content boosting architecture of Fig. 4, the latter detection mechanism allows for detecting the data traffic to be prioritized in a highly efficient manner, because the network addresses of the cache server 470 and the edge server are 480, which determine the source address of the data packets, are known in advance. Further, the boosting controller 460 may have an interface with respect to the GW 420 for receiving copied authentication signaling CR with respect to the GW 420, e.g., signaling according to the Radius protocol or the Diameter protocol. Moreover, the boosting controller 460 may be provided with an interface to the edge server 470 and/or to the cache server 480, as well as an interface with respect to the GW 420. The latter interfaces have the purpose of routing traffic between the edge server 470 and/or cache server 480 and the GW 420 through the boosting controller. This traffic comprises the selected data traffic to be prioritized.

The edge server 470 in turn may be provided with an external packet interface with respect to the CP server 510, which allows the edge server 470 to obtain content data for delivery to UEs connected to the GW 420, and an internal packet interface with respect to the boosting controller 460 and the cache server 480. Similarly, the cache server 480 may be provided with an internal packet interface with respect to the boosting controller 460 and the edge server 470. The internal packet interface of the cache server 480 allows the cache server 480 to cache content data obtained by the edge server 470 and to provide cached content data via the boosting controller 460 and the GW 420 to UEs. In some implementations, e.g., in implementations without the edge server 470, the cache server 480 could also be provided with an external packet interface with respect to the CP server 510, which would allow the cache server 480 to directly obtain content data for delivery to UEs connected to the GW 420.

Here, it is to be noted that the internal packet interfaces of the above components of the content boosting infrastructure 450 are preferably implemented with network addresses from a specific range, e.g., IP addresses from a private subnet. Accordingly, it is possible to efficiently differentiate between traffic from the content booster infrastructure 450 and other traffic, e.g., from the server 580, using the network addresses in the data packets of the traffic. More specifically, the GW 420 and/or the UE 410 may use packet filters matching the network addresses from the specific range.

In some implementations, the components of the content boosting infrastructure 450 may be configured with two different specific ranges of network addresses, e.g., IP addresses from two different private subnets. One specific range may then be associated with peered CPs requiring prioritized delivery of content while the other specific range may be associated with peered CPs not requiring prioritized delivery of content or a different level of prioritization.

The CDN DNS 560 may be configured to resolve a DNS query towards peered CPs accordingly. For example, it may return a corresponding address from the specific range or ranges of network addresses used by the content boosting infrastructure. The CDN DNS 560 may identify the MBB operator by the network address of the local DNS 425.

In the content boosting architecture as illustrated in Fig. 4, the above concepts of flow admission control on the basis of traffic load information may be applied in the boosting controller 460. That is to say, the boosting controller 460 may act as the network node 100 of Fig. 2, the UE 410 corresponding to the UE 10 of Fig. 2, and the GW 420 corresponding to the GW 26 of Fig. 2. In this case, the boosting controller 460 has the possibility remapping certain packet flows from a dedicated bearer to a default bearer if the traffic load information indicates that usage of the dedicated bearer would adversely affect performance of the MBB network. This may also be used to efficiently ensure that a SLA between the broker and the CP, a SLA between the broker and the CDN operator, and/or a SLA between the broker and the MBB operator is not violated.

In the content boosting architecture of Fig. 4, a part of the traffic load information may also be obtained from one or more other content boosting infrastructures. For example, this may be useful if the same mobile network has SLAs with multiple brokers. Such SLAs may nevertheless define limits with respect to total volume or bandwidth injected into the mobile network by the brokers. In order to fulfill such a SLAs, the traffic-load based flow admission control mechanisms used by the different brokers may act in a coordinated manner to ensure that the SLAs are fulfilled. For example, this could be achieved by exchanging locally obtained traffic load information between the boosting controllers of different brokers.

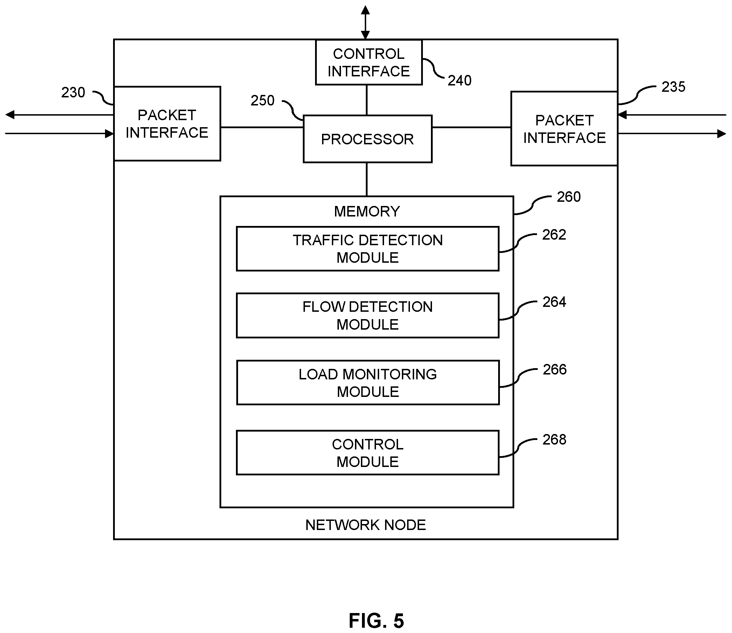

Fig. 5 further illustrates an implementation of a network node according to an embodiment of the invention. For example, the network node may correspond to the network node 100 of Fig. 2, and may also implement functionalities of the boosting controller 460 of Fig. 4. The network node may be configured to implement the above concepts of flow admission control on the basis of traffic load information.

In the illustrated implementation, the network node includes a packet interface 230 to send packets and to receive data packets. The packet interface 230 may in particular be used for receiving data traffic to be forwarded to a UE, e.g., the UE 10 of Figs. 1 and 2. In addition, the network node also includes a further packet interface 235 to send and receive data packets. The further packet interface 235 may in particular be used to forward the received data traffic to the UE. Accordingly, data traffic to a UE may be passed through the network node. Further, the network node 240 may also be provided with a control interface 240. The control interface 240 may be used for sending control signaling to initiate bearer control procedures, e.g., establishment of a dedicated bearer, or receiving information concerning existing bearers. In the illustrated 3GPP scenario, the control interface 240 may be implemented as the Rx interface according to the 3GPP TSs.

Further, the device includes a processor 250 coupled to the interfaces 230, 240 and a memory 260 coupled to the processor 250. The memory 260 may include a read-only memory (ROM), e.g., a flash ROM, a random-access memory (RAM), e.g., a Dynamic RAM (DRAM) or static RAM (SRAM), a mass storage, e.g., a hard disk or solid state disk, or the like. The memory 260 includes suitably configured program code to be executed by the processor 250 so as to implement the above-described functionalities of flow admission control on the basis of traffic load information. More specifically, the memory 260 may include a traffic detection module 270 so as to implement the above-described functionalities of detecting a certain type of data traffic, e.g., as performed by the traffic detector 110 of Fig. 2. Further, the memory 260 may include a flow detection module so as to implement the above-described functionalities of detecting a packet flow in the data traffic and marking data packets of the detected data flow. Further, the memory 260 may include a control module so as to implement the above described control processes for determining a dedicated bearer for transmission of the detected data traffic and deciding whether a detected packet flow can be admitted to the determined dedicated bearer. The processor 250 in connection with the traffic detection module 262 may implement the traffic detector 110 of Fig. 2, the processor 250 in connection with the flow detection module 264 may implement the flow detector 120 of Fig. 2, the processor 250 in connection with the load monitoring module 266 may implement the load monitor 130 of Fig. 2, and the processor 250 in connection with the control module 268 may implement the first controller 160 and the second controller 170 of Fig. 2.

It is to be understood that the structure as illustrated in Fig. 5 is merely schematic and that the network node may actually include further components which, for the sake of clarity, have not been illustrated, e.g., further interfaces. Also, it is to be understood that the memory 250 may include further types of program code modules, which have not been illustrated, e.g., program code modules for implementing functionalities of the boosting controller 460 if Fig. 4. According to some embodiments, also a computer program product may be provided for implementing concepts according to embodiments of the invention, e.g., a medium storing the program code to be stored in the memory 260.

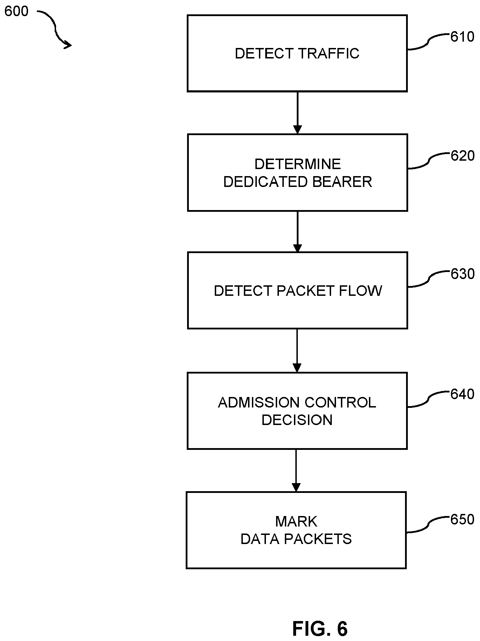

Fig. 6 shows a flowchart for illustrating a method 600 of controlling a data traffic in a mobile network. The method may be used in a mobile network environment as illustrated in Fig. 1 and in particular be implemented by the network node 100 of Fig. 2. For this purpose, the method may include steps corresponding to the above-described functionalities of the network node.

At step 610, data traffic of a certain type is detected. The detection of data traffic in step 610 may distinguish between different types of data traffic by inspecting data packets of the data traffic, e.g., using DPI, and/or by inspecting a network name resolution message preceding the data traffic, e.g., by inspecting DNS queries or DNS responses such as accomplished by the boosting controller 460 of Fig. 4. For example, an identifier of a source of the data traffic included in such messages may be used as a basis for detecting the data traffic.

At step 620, a dedicated bearer for transmission of the detected data traffic is determined. This may involve initiating establishment of the dedicated bearer and/or configuring one or more packet filters for directing data packets of the detected data traffic to the dedicated bearer, which may be accomplished by sending application level signaling to a policy controller of the mobile network. The packet filter may be configured to match an IP 5-tuple of the data packets. In some scenarios, the dedicated bearer may already exist, and initiating establishment of the dedicated bearer and/or configuration of the packet filter may be omitted. Information concerning existing bearers could be received in application level signaling.

At step 630, a packet flow is detected in the data traffic. The packet flow may be detected by inspecting a protocol header included in the data packets of the packet flow, e.g., by inspecting an IP 5-tuple of the data packets.

At step 640, an admission control decision is taken. The admission control decision defines whether the detected packet flow can be admitted to the dedicated bearer as determined in step 620. The admission control decision is taken on the basis of traffic load information. The traffic load information may include a traffic load on the dedicated bearer determined at step 620 and/or on one or more other bearers sharing network resources with the dedicated bearer. For example, the traffic load may be represented a used bandwidth and/or on an accumulated traffic volume. Also a total number of the bearers, dedicated or not, sharing network resources may be taken into account. Also data reflecting a SLA with a CP, with an operator of a CDN, or with an operator of the mobile network may be taken into account. In some embodiments, the traffic load information may be used to determine an extent to which a pool of available resources is used.

Not only the admission control decision of step 640, but also the determination of step 620 may be accomplished on the basis of the traffic load information. In such implementations, the determination of step 620 and the admission control of step 640 may be based on a common pool of available resources. This may be used to balance the use of resources by, on the one hand, establishing new dedicated bearers and, on the other hand, mapping new packet flows to existing bearers.

In some embodiments, the decision may be taken to control a rate at which packet flows are admitted to the dedicated bearer and to one or more other dedicated bearers.

At step 650 the data packets of the packet flow detected at step 630 are marked in according to the admission control decision of step 640, e.g., by including an indicator into the data packets. For example, if the admission control decision is that the detected data flow cannot be admitted to the dedicated bearer, a corresponding indicator may be included into the data packets. For example, if the data packets are IP data packets, the indicator may be included in a DSCP field of the data packets.

The marking of the data packets may used as additional information by the packet filter(s) configured to direct the data packets to the dedicated bearer. For this purpose, the packet filter(s) may be further configured to direct the data packets of the detected flow to a default bearer if the marking indicates that the detected packet flow cannot be admitted to the dedicated bearer. For example, if the marking indicates that the packet flow cannot be admitted to the dedicated bearer, the packet filter(s) may block the data packets of the packet flow from being directed to the bearer, thereby redirecting the data packets to a default bearer.

It is to be understood that the examples and embodiments as explained above are merely illustrative and susceptible to various modifications. For example, the concepts could be used in other types of communication network environment using bearers. Also, the two stages of control may be performed by various devices, of which the network node in the form of the boosting controller 460 of Fig. 4 is merely one example. In addition, although the above explanations focus on DL data traffic, the concepts could be applied in a corresponding manner to UL data traffic. Further, it is to be understood that the above concepts may be implemented by using correspondingly designed software to be executed by a processor of an existing device, or by using dedicated device hardware.

## Claims

1. A method of controlling data traffic in a mobile network comprising one or more packet filters (72, 74) for directing data traffic to a default bearer (52) or to a dedicated bearer (54) having a higher quality of service level than the default bearer (52), the method comprising:
detecting (610), by a first detector (110) of a network node (100) of the mobile network, data traffic of a certain type;
determining (620), by a first controller (160) of the network node (100), the dedicated bearer (54) for transmission of the detected data traffic;
detecting (630), by a second detector (120) of the network node (100), a packet flow in the detected data traffic;
on the basis of traffic load information, taking a decision (640), by a second controller (170) of the network node (100), whether the detected packet flow can be admitted to the dedicated bearer (54); and
marking (650), by the second detector (120), data packets of the detected packet flow according to the decision,
wherein said one or more packet filters (72, 74) are configured to direct data packets of the detected flow to the dedicated bearer (54) if the marking indicates that the detected packet flow can be admitted to the dedicated bearer (54), and to direct data packets of the detected flow to the default bearer (52) if the marking indicates that the detected packet flow can not be admitted to the dedicated bearer (54).

2. The method according to claim 1,
wherein said determining (620) the dedicated bearer (54) is accomplished on the basis of the traffic load information; and
wherein said determining (620) of the dedicated bearer (54) and said taking the decision (640) whether the detected packet flow can be admitted to the dedicated bearer (54) are accomplished on the basis of a common pool of available resources.

3. The method according to claim 1 or 2,
wherein the traffic load information comprises a traffic load on the dedicated bearer (54) and/or on at least one other bearer (52, 54) sharing network resources with the dedicated bearer (54).

4. The method according to any one of the preceding claims, comprising:
determining the traffic load information by monitoring, by a load monitor (130) of the network node (100) a used bandwidth and/or an accumulated traffic volume of the dedicated bearer (54) and/or on at least one other bearer (52, 54) sharing network resources with the dedicated bearer (54).

5. The method according to any one of the preceding claims,
wherein the packet flow is detected (630) by inspecting an Internet Protocol 5-tuple included in the data packets of the packet flow.

6. The method according to any one of the preceding claims,
wherein the data traffic is detected (610) on the basis of a source address of data packets.

7. The method according to any one of the preceding claims,
wherein the marking (650) of the data packets is accomplished by including an indicator into the data packets.

8. The method according to claim 7,
wherein the data packets correspond to Internet Protocol data packets and the indicator is included in a Differentiated Services Code Point field of the data packets.

9. The method according to any one of the preceding claims, comprising:
sending application level signaling to a policy controller (30) of the mobile network to initiate establishment of the dedicated bearer (54).

10. The method according to any one of the preceding claims,
wherein said decision whether the detected packet flow can be admitted to the dedicated bearer (54) is taken (640)
- to control a rate at which packet flows are admitted to the dedicated bearer (54) and/or to at least one other bearer (52, 54) sharing network resources with the dedicated bearer (54), and/or
- on the basis of data reflecting a service level agreement with a content provider and/or a service level agreement with an operator of the mobile network.

11. A device (100) for controlling data traffic in a mobile network comprising one or more packet filters (74) for directing data traffic to a default bearer (52) or to a dedicated bearer (54) having a higher quality of service level than the default bearer (54), the device (100) comprising:
a first detector (110) configured to detect data traffic of a certain type;
a first controller (160) configured to determine the dedicated bearer (54) for transmission of the detected data traffic;
a second detector (120) configured to detect a packet flow in the detected data traffic;
and a second controller (170) configured to take, on the basis of traffic load information, a decision whether the detected packet flow can be admitted to the dedicated bearer (54);
wherein the second detector (120) is configured to mark data packets of the detected packet flow according to the decision,
wherein said one or more packet filters (74) are configured to direct data packets of the detected flow to the dedicated bearer (54) if the marking indicates that the detected packet flow can be admitted to the dedicated bearer (54), and to direct data packets of the detected flow to the default bearer (52) if the marking indicates that the detected packet flow can not be admitted to the dedicated bearer (54).

12. The device according to claim 11,
wherein the first controller (160) is configured to initiate establishment of the dedicated bearer (54).

13. The device according to claim 11 or 12, comprising:
a control interface (140) for receiving information concerning existing bearers (52, 54) and/or for sending application level signaling to initiate establishment of the dedicated bearer (54).

14. The device according to any one of claims 11 to 13, comprising:
a flow monitor (130) configured to obtain the traffic load information.

## Patentansprüche

1. Verfahren zum Steuern von Datenverkehr in einem Mobilfunknetzwerk, umfassend einen oder mehrere Paketfilter (72, 74) zum Leiten von Datenverkehr zu einem Standardüberbringer (52) oder zu einem dedizierten Überbringer (54) mit einer höheren Qualität an Dienstgrad als der Standardüberbringer (52), das Verfahren umfassend:
Erfassen (610) von Datenverkehr eines bestimmten Typs durch einen ersten Detektor (110) eines Netzwerkknotens (100) des Mobilfunknetzwerks;
Ermitteln (620), durch ein erstes Steuergerät (160) des Netzwerkknotens (100), des dedizierten Überbringers (54) zur Übertragung des erfassten Datenverkehrs;
Erfassen (630) eines Paketflusses im erfassten Datenverkehr durch einen zweiten Detektor (120) des Netzwerkknotens (100);
Treffen einer Entscheidung (640) durch ein zweites Steuergerät (170) des Netzwerkknotens (100) auf der Basis von Verkehrslastinformationen, ob der erfasste Paketstrom dem dedizierten Überbringer (54) überlassen werden kann; und
Markieren (650), durch den zweiten Detektor (120), von Datenpaketen des erfassten Paketstroms gemäß der Entscheidung,
wobei der eine oder die mehreren Paketfilter (72, 74) konfiguriert sind, Datenpakete des erfassten Stroms an den dedizierten Überbringer (54) zu leiten, falls die Markierung anzeigt, dass der erfasste Paketfluss dem dedizierten Überbringer (54) überlassen werden kann, und Datenpakete des erfassten Stroms zum Standardüberbringer (52) zu leiten, falls die Markierung anzeigt, dass der erfasste Paketstrom nicht dem dedizierten Überbringer (54) überlassen werden kann.

2. Verfahren nach Anspruch 1,
wobei das Ermitteln (620) des dedizierten Überbringers (54) auf der Basis der Verkehrslastinformationen bewerkstelligt wird; und
wobei das Ermitteln (620) des dedizierten Überbringers (54) und das Treffen der Entscheidung (640), ob der erfasste Paketfluss dem dedizierten Überbringer (54) überlassen werden kann, auf der Basis eines gemeinsamen Pools verfügbarer Ressourcen bewerkstelligt wird.

3. Verfahren nach Anspruch 1 oder 2,
wobei die Verkehrslastinformationen eine Verkehrslast auf dem dedizierten Überbringer (54) und/oder mindestens einem anderen Überbringer (52, 54) umfassen, der Netzwerkressourcen mit dem dedizierten Überbringer (54) teilt.

4. Verfahren nach einem der vorangehenden Ansprüche, umfassend:
Ermitteln der Verkehrslastinformationen durch Überwachen, durch einen Lastmonitor (130) des Netzwerkknotens (100), einer verwendeten Bandbreite und/oder eines angesammelten Verkehrsvolumens des dedizierten Überbringers (54) und/oder mindestens eines anderen Überbringers (52, 54), der Netzwerkressourcen mit dem dedizierten Überbringer (54) teilt.

5. Verfahren nach einem der vorangehenden Ansprüche,
wobei der Paketfluss durch Überprüfen eines InternetProtokoll 5-Tupels erfasst wird (630), das in den Datenpaketen des Paketflusses enthalten ist.

6. Verfahren nach einem der vorangehenden Ansprüche,
wobei der Datenverkehr auf der Basis einer Quelladresse von Datenpaketen erfasst wird (610).

7. Verfahren nach einem der vorangehenden Ansprüche,
wobei die Markierung (650) der Datenpakete durch ein Einschließen eines Indikators in die Datenpakete bewerkstelligt wird.

8. Verfahren nach Anspruch 7,
wobei die Datenpakete Internetprotokoll-Datenpaketen entsprechen und der Indikator in einem Differentiated Services Code Point-Feld der Datenpakete enthalten ist.

9. Verfahren nach einem der vorangehenden Ansprüche, umfassend:
Senden einer Anwendungsgrad-Signalisierung an ein Richtliniensteuergerät (30) des Mobilfunknetzwerks, um eine Errichtung des dedizierten Überbringers (54) zu initiieren.

10. Verfahren nach einem der vorangehenden Ansprüche, wobei die Entscheidung, ob der erfasste Paketfluss dem dedizierten Überbringer (54) überlassen werden kann, getroffen wird (640)
- um eine Rate zu steuern, bei der Paketflüsse dem dedizierten Überbringer (54) überlassen sind und/oder mindestens einem anderen Überbringer (52, 54), der Netzwerkressourcen mit dem dedizierten Überbringer (54) teilt, und/oder
- auf der Basis von Daten, die einen Dienstgradvertrag mit einem Inhaltsanbieter und/oder einen Dienstgradvertrag mit einem Betreiber des Mobilfunknetzwerks wiedergeben.

11. Vorrichtung (100) zum Steuern von Datenverkehr in einem Mobilfunknetzwerk, umfassend einen oder mehrere Paketfilter (74) zum Leiten von Datenverkehr zu einem Standardüberbringer (52) oder zu einem dedizierten Überbringer (54) mit einer höheren Qualität an Dienstgrad als der Standardüberbringer (54), wobei die Vorrichtung (100) umfasst:
einen ersten Detektor (110), der konfiguriert ist, Datenverkehr eines bestimmten Typs zu erfassen;
ein erstes Steuergerät (160), das konfiguriert ist, den dedizierten Überbringer (54) zur Übertragung des erfassten Datenverkehrs zu ermitteln;
einen zweiten Detektor (120), der konfiguriert ist, einen Paketfluss im erfassten Datenverkehr zu erfassen;
und ein zweites Steuergerät (170), das konfiguriert ist, auf der Basis von Verkehrslastinformationen eine Entscheidung zu treffen, ob der erfasste Paketfluss dem dedizierten Überbringer (54) überlassen werden kann;
wobei der zweite Detektor (120) konfiguriert ist, Datenpakete des erfassten Paketflusses gemäß der Entscheidung zu markieren,
wobei der eine oder die mehreren Paketfilter (74) konfiguriert sind, Datenpakete des erfassten Flusses zum dedizierten Überbringer (54) zu leiten, falls die Markierung anzeigt, dass der erfasste Paketfluss dem dedizierten Überbringer (54) überlassen werden kann, und Datenpakete des erfassten Flusses zum Standardüberbringer (52) zu leiten, falls die Markierung anzeigt, dass der erfasste Paketfluss nicht dem dedizierten Überbringer (54) überlassen werden kann.

12. Vorrichtung nach Anspruch 11,
wobei das erste Steuergerät (160) konfiguriert ist, eine Errichtung des dedizierten Überbringers (54) zu initiieren.

13. Vorrichtung nach Anspruch 11 oder 12, umfassend:
eine Steuerschnittstelle (140) zum Empfangen von Informationen bezüglich bestehenden Überbringern (52, 54) und/oder zum Senden einer Anwendungsgrad-Signalisierung, um die Errichtung des dedizierten Überbringers (54) zu initiieren.

14. Vorrichtung nach einem der Ansprüche 11 bis 13, umfassend:
einen Flussmonitor (130), der konfiguriert ist, die Verkehrslastinformationen zu erhalten.

## Revendications

1. Procédé de commande de trafic de données dans un réseau mobile comprenant un ou plusieurs filtres de paquets (72, 74) pour diriger un trafic de données vers un support par défaut (52) ou vers un support dédié (54) ayant un niveau de qualité de service supérieur à celui du support par défaut (52), le procédé comprenant :
la détection (610), par un premier détecteur (110) d'un noeud de réseau (100) du réseau mobile, d'un trafic de données d'un certain type ;
la détection (620), par un premier organe de commande (160) du noeud de réseau (100), du support dédié (54) pour une transmission du trafic de données détecté ;
la détection (630), par un deuxième détecteur (120) du noeud de réseau (100), d'un flux de paquets dans le trafic de données détecté ;
sur la base d'informations de charge de trafic, la prise d'une décision (640), par un deuxième organe de commande (170) du noeud de réseau (100), si le flux de paquets détecté peut être admis dans le support dédié (54) ; et
le marquage (650), par le deuxième détecteur (120), de paquets de données du flux de paquets détecté en fonction de la décision,
dans lequel lesdits un ou plusieurs filtres de paquets (72, 74) sont configurés pour diriger des paquets de données du flux détecté vers le support dédié (54) si le marquage indique que le flux de paquets détecté peut être admis dans le support dédié (54), et pour diriger des paquets de données du flux détecté vers le support par défaut (52) si le marquage indique que le flux de paquets détecté ne peut pas être admis dans le support dédié (54).

2. Procédé selon la revendication 1,
dans lequel ladite détermination (620) du support dédié (54) est accomplie sur la base des informations de charge de trafic ; et
dans lequel ladite détermination (620) du support dédié (54) et ladite prise de la décision (640) si le flux de paquets détecté peut être admis dans le support dédié (54) sont accomplies sur la base d'un groupe commun de ressources disponibles.

3. Procédé selon la revendication 1 ou 2,
dans lequel les informations de charge de trafic comprennent une charge de trafic sur le support dédié (54) et/ou sur au moins un autre support (52, 54) partageant des ressources de réseau avec le support dédié (54).

4. Procédé selon l'une quelconque des revendications précédentes, comprenant :
la détermination des informations de charge de trafic par la surveillance, par un moniteur de charge (130) du noeud de réseau (100), d'une largeur de bande utilisée et/ou d'un volume de trafic cumulé du support dédié (54) et/ou d'au moins un autre support (52, 54) partageant des ressources de réseau avec le support dédié (54).

5. Procédé selon l'une quelconque des revendications précédentes,
dans lequel le flux de paquets est détecté (630) par l'inspection d'un quintuple de Protocole Internet inclus dans les paquets de données du flux de paquets.

6. Procédé selon l'une quelconque des revendications précédentes,
dans lequel le trafic de données est détecté (610) sur la base d'une adresse de source de paquets de données.

7. Procédé selon l'une quelconque des revendications précédentes,
dans lequel le marquage (650) des paquets de données est accompli par l'inclusion d'un indicateur dans les paquets de données.

8. Procédé selon la revendication 7,
dans lequel les paquets de données correspondent à des paquets de données de Protocole Internet et l'indicateur est inclus dans un champ de Point de code de services différenciés des paquets de données.

9. Procédé selon l'une quelconque des revendications précédentes, comprenant :
l'envoi d'une signalisation de niveau d' application à un organe de commande de politique (30) du réseau mobile pour lancer un établissement du support dédié (54).

10. Procédé selon l'une quelconque des revendications précédentes,
dans lequel ladite décision si le flux de paquets détecté peut être admis dans le support dédié (54) est prise (640)
- pour commander un débit auquel des flux de paquets sont admis dans le support dédié (54) et/ou dans au moins un autre support (52, 54) partageant des ressources de réseau avec le support dédié (54), et/ou
- sur la base de données reflétant un accord de niveau de service avec un fournisseur de contenu et/ou un accord de niveau de service avec un opérateur du réseau mobile.

11. Dispositif (100) pour commander un trafic de données dans un réseau mobile comprenant un ou plusieurs filtres de paquets (74) pour diriger un trafic de données vers un support par défaut (52) ou vers un support dédié (54) ayant un niveau de qualité de service supérieur à celui du support par défaut (52), le dispositif (100) comprenant :
un premier détecteur (110) configuré pour détecter un trafic de données d'un certain type ;
un premier organe de commande (160) configuré pour déterminer le support dédié (54) pour une transmission du trafic de données détecté ;
un deuxième détecteur (120) configuré pour détecter un flux de paquets dans le trafic de données détecté ;
et un deuxième organe de commande (170) configuré pour prendre, sur la base d'informations de charge de trafic, une décision si le flux de paquets détecté peut être admis dans le support dédié (54) ;
dans lequel le deuxième détecteur (120) est configuré pour marquer des paquets de données du flux de paquets détecté en fonction de la décision,
dans lequel lesdits un ou plusieurs filtres de paquets (74) sont configurés pour diriger des paquets de données du flux détecté vers le support dédié (54) si le marquage indique que le flux de paquets détecté peut être admis dans le support dédié (54), et pour diriger des paquets de données du flux détecté vers le support par défaut (52) si le marquage indique que le flux de paquets détecté ne peut pas être admis dans le support dédié (54).

12. Dispositif selon la revendication 11,
dans lequel le premier organe de commande (160) est configuré pour lancer un établissement du support dédié (54).

13. Dispositif selon la revendication 11 ou 12, comprenant
une interface de commande (140) pour recevoir des informations concernant les supports existants (52, 54) et/ou pour envoyer une signalisation de niveau d'application pour lancer un établissement du support dédié (54).

14. Dispositif selon l'une quelconque des revendications 11 à 13, comprenant :
un moniteur de flux (130) configuré pour obtenir les informations de charge de trafic.
